**Europäisches Patentamt**

**European Patent Office**

**Office européen des brevets**

(19)

(11) Veröffentlichungsnummer: **0 248 229**
**B1**

(12)

# EUROPÄISCHE PATENTSCHRIFT

(45) Veröffentlichungstag der Patentschrift:
**19.09.90**

(51) Int. Cl.⁵: **B60T 17/02, F16L 27/00**

(21) Anmeldenummer: **87106627.0**

(22) Anmeldetag: **07.05.87**

(54) Bremsgerät für eine hydraulische Fahrzeugbremsanlage.

(30) Priorität: **04.06.86 DE 3618835**

(43) Veröffentlichungstag der Anmeldung:
**09.12.87 Patentblatt 87/50**

(45) Bekanntmachung des Hinweises auf die Patenterteilung:
**19.09.90 Patentblatt 90/38**

(84) Benannte Vertragsstaaten:
**AT DE FR GB SE**

(56) Entgegenhaltungen:
**DD-A- 105 878**
**DE-A- 2 035 869**
**DE-A- 3 006 771**

**Serviceanleitung "BOSCH Antilock Brake System 5E-11", Fig. 5E-8**
**Prospekt "50.IAA 1983. Das ATE Anti-Skid System"**

(73) Patentinhaber: **ROBERT BOSCH GMBH, Postfach 50, D-7000 Stuttgart 1(DE)**

(72) Erfinder: **Zirps, Wilhelm, Ing. grad., Immanuel-Kant-Strasse 9, D-7254 Hemmingen(DE)**

## Beschreibung

### Stand der Technik

Die Erfindung geht aus von einem Bremsgerät für eine hydraulische Fahrzeugbremsanlage der im Oberbegriff des Anspruchs 1 definierten Gattung.

Solche, ein elektrohydraulisches Betätigungsaggregat und eine Rückförderpumpe enthaltende Bremsgeräte werden an der Karosserie des Fahrzeugs, z.B. an der Spritzwand im Motorraum, montiert. Da die Rückförderpumpe durch ihre Fördermengen-Ungleichförmigkeit erhebliche Geräusche verursacht, wird zur Körperschallentkopplung die Pumpe mittels elastischer Lager an dem Gehäuse des Betätigungsaggregats weich aufgehängt. Die zwischen den beiden Gehäuseteilen vorhandenen Verbindungsleitungen, wie Saug- und Druckleitungen, müssen wegen der vorhandenen Relativbewegung der beiden Gehäuseteile so ausgebildet werden, daß die Beweglichkeit der Rückförderpumpe innerhalb der elastischen Lagerung gewährleistet ist, daß nur sehr kleine Kräfte und Momente von der Rückförderpumpe auf das Betätigungsaggregat übertragen werden und daß durch Druckbeaufschlagung in den Verbindungsleitungen keine Kräfte oder Momente erzeugt werden.

Bei einem bekannten Bremsgerät der eingangs genannten Art (siehe z.B. Serviceanleitung "BOSCH III Antilock Brake System 5E-11", Fig. SE-8) sind daher die Druck- und Saugleitungen als flexible Schläuche ausgebildet. Um zu vermeiden, daß Kräfte oder Momente übertragen werden, sind die Schläuche relativ lang bemessen. Hochdruckschläuche sind jedoch recht teuer und benötigen viel Platz, was bei Bremsgeräten für Zweikreisbremsanlagen besonders ins Gewicht fällt, da hier jeweils zwei Druck- und zwei Saugleitungen, also insgesamt vier Verbindungsschläuche, zwischen dem Betätigungsaggregat und der Rückförderpumpe erforderlich sind. Zudem sind Hochdruckschläuche wegen ihrer großen Steifigkeit nicht rückwirkungsfrei. Sie regen im unteren Frequenzbereich Körperschall an und leiten diesen weiter.

Durch die DE-A 2 035 869 ist es bekannt, zwischen zwei in einem Abstand angeordneten Bauteilen und deren im wesentlichen fluchtenden Kanälen ein Verbindungsrohr gelenkig und mit wenigstens einem seiner Enden relativ zu einem Bauteil längsverschieblich anzuordnen. Mittels des gelenkig angeordneten Verbindungsrohrs ist beispielsweise ein flexibler Schlauch ersetzbar. Es entsteht aber der Nachteil, daß bei einer elastischen Lagerung wenigstens eines der beiden Bauteile hydraulische Drücke und Druckstöße in dem Verbindungsrohr und den Kanälen zu störenden Abstandsänderungen der Bauteile und zu Vibrationen führen können. Die Vibrationen ihrerseits können zur Abstrahlung von störendem Schall führen.

Es stellte sich deshalb die Aufgabe, ein Bremsgerät so zu verbessern, daß seine Saug- und Druckleitungen einfach und kostengünstig herstellbar sind und rückwirkungsarm arbeiten zur Vermeidung der Anregung von störenden Bewegungen des Pumpengehäuses und des Aggregatgehäuses und zur Vermeidung der Abstrahlung von störendem Schall.

### Vorteile der Erfindung

Das erfindungsgemäße Bremsgerät mit den kennzeichnenden Merkmalen des Anspruchs 1 hat demgegenüber den Vorteil, daß die Saug- und Druckleitungen einfach und kostengünstig herstellbar sind und extrem wenig Bauraum benötigen. Mit Ausnahme der relativ geringen Reibkräfte und Reibmomente der Verbindungsröhrchen werden keine Kräfte oder Momente erzeugt oder übertragen, so daß störenden Vibrationen und der Aussendung von Schall entgegengewirkt wird. Die flüssigkeitsdichte flexible Verbindung zwischen dem Aggregat- und dem Pumpengehäuse ist zuverlässig im Betrieb und zeichnet sich durch eine hohe Lebensdauer aus.

Durch die in den weiteren Ansprüchen aufgeführten Maßnahmen sind vorteilhafte Weiterbildungen und Verbesserungen des im Anspruch 1 angegebenen Bremsgerätes möglich.

Eine vorteilhafte Ausführungsform der Erfindung ergibt sich dabei aus Anspruch 2, insbesondere in Verbindung mit Anspruch 3. Durch diese Ausbildung der Verbindungsröhrchen werden die Reibkräfte zwischen Verbindungsröhrchen und Lagerbohrung extrem gering gehalten.

Eine vorteilhafte Ausführungsform der Erfindung ergibt sich auch aus Anspruch 5. Durch diese Gestaltung der Verbindungsröhrchen lassen sich diese einfach und preiswert herstellen.

Eine vorteilhafte Ausführungsform der Erfindung ergibt sich aus Anspruch 6. Durch diese Ausbildung lassen sich die Verbindungsröhrchen innerhalb der elastischen Lager bzw. die elastischen Lager zuleich in den für die Verbindungsröhrchen erforderlichen Lagerbohrungen unterbringen. Damit wird eine wesentliche Platzersparnis erzielt.

Eine vorteilhafte Ausführungsform der Erfindung ergibt sich auch aus Anspruch 7 insbesondere in Verbindung mit einem oder mehreren der Ansprüche 8 - 1O. Durch diese Maßnahmen läßt sich insgesamt eine fertigungstechnisch günstige Lösung der elastischen Lagerung einerseits und der flüssigkeitsdichten flexiblen Verbindung andererseits von Aggregat- und Pumpengehäuse erreichen.

### Zeichnung

Die Erfindung ist anhand eines in der Zeichnung dargestellten Ausführungsbeispiels in der nachfolgenden Beschreibung näher erläutert. Es zeigen:

Fig. 1 eine Seitenansicht eines Bremsgerätes für eine mit einem Antiblockiersystem ausgestattete hydraulische Fahrzeugbremsanlage,
Fig. 2 einen Schnitt längs der Linie II-II in Fig. 1,
Fig. 3 einen Schnitt längs der Linie III-III in Fig. 1,
Fig. 4 eine vergrößerte Darstellung des Ausschnittes IV in Fig. 3,
Fig. 5 einen Schnitt längs der Linie V-V in Fig. 4.

Beschreibung des Ausführungsbeispiels

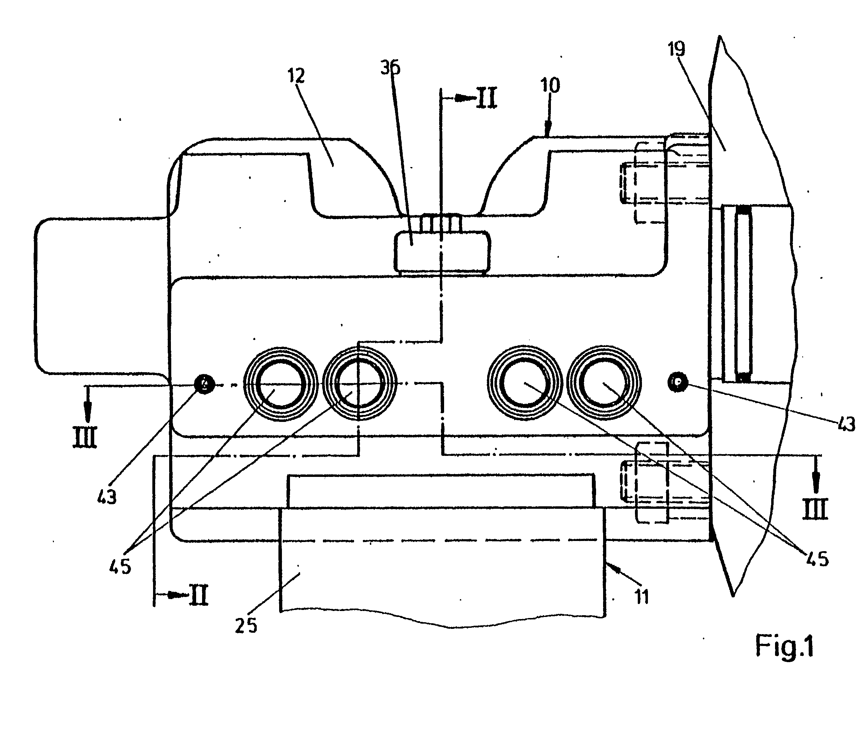

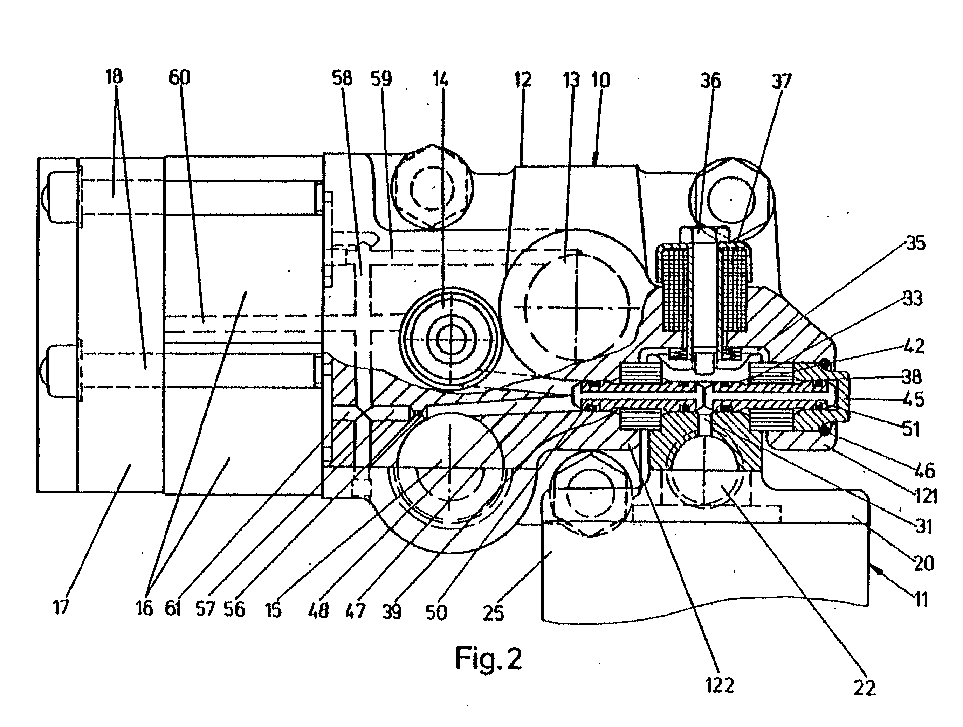

Das in Fig. 1 in Seitenansicht und in Fig. 2 - 5 in verschiedenen Schnitten dargestellte Bremsgerät ist zur Verwendung in einer hydraulischen Zwei-kreis-Bremsanlage eines Kraftfahrzeugs vorgese-hen, die mit einem Antiblockiersystem, kurz ABS genannt, ausgerüstet ist. Das Bremsgerät ist integrierter Bestandteil des Antiblockiersystems, das noch zusätzlich einen elektronischen Regler und vier Radsensoren umfaßt, die in bekannter Weise die Drehzahl der einzelnen Räder erfassen und entsprechende elektrische Signale an den elektronischen Regler liefern.

Das Bremsgerät umfaßt ein Betätigungsaggregat 10 und eine Förderpumpe 11. Das Betätigungsaggregat 10 enthält in einem Aggregatgehäuse 12 einen zweikreisigen Hauptbremszylinder 13, zwei Spei-cherkammern 14 für rückfließende Bremsflüssig-keit, zwei Dämpfungskammern 15 und vier Magnetventile 16 zur Drucksteuerung in den Radbremszylindern, wozu das Bremsgerät über vier Bremsleitungen mit jeweils einem der den Rädern zugeordneten Radbremszylindern verbunden ist. In Fig. 2 sind nur eine Speicherkammer 14, eine Dämpfungskammer 15 und zwei Magnetventile 16 zu sehen, da entsprechende Bauelemente jeweils in Blickrichtung hintereinander angeordnet sind. In jeder Speicherkammer 14 befindet sich ein nicht dargestellter, mit einer Feder vorgespannter Kolben, der bei Einströmen von Bremsflüssigkeit ausweicht, so daß sich das Volumen der Speicherkammer vergrößert. Die Magnetventile 16 sind in einem Deckel 17 gehalten, der mit Schrauben 18 am Aggregatgehäuse 12 angeflanscht ist. Im Deckel 17 befinden sich auch die nicht gezeichneten Anschlüsse für die zu den Radbremszylindern führenden Bremsleitungen. Wie in Fig. 1 angedeutet ist, ist an dem Aggregatgehäuse 12 noch ein Bremskraftverstärker 19 ange-schraubt, der als Unterdruck-Bremskraftverstär-ker oder als hydraulischer Bremskraftverstärker ausgebildet sein kann.

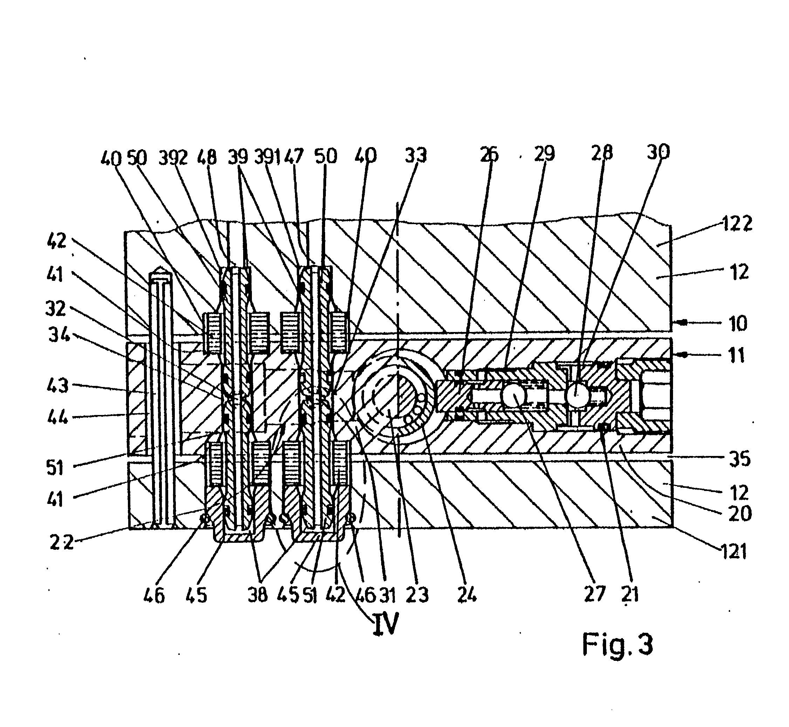

Wie insbesondere in Fig. 3 zu sehen ist, enthält die Förderpumpe 11 in einem Pumpengehäuse 20 zwei Pumpenelemente 21,22, die über einen Exzenter 23 und ein Nadellager 24 angetrieben werden. In Fig. 3 ist das Pumpenelement 22 strichliniert angedeutet, während das Pumpenelement 21 im Längsschnitt zu sehen ist. Der Exzenter 23 wird von einem Elektromotor 25 angetrieben, der am Pumpengehäuse 20 angeflanscht ist (Fig. 2). In jedem Pumpenelement 21,22 befindet sich ein von dem Exzenter 23 angetriebener Kolben 26, ein Saugventil 27 und ein Druckventil 28, die hintereinander geschaltet sind und einen Saugraum 29 und einen Druckraum 30 voneinander trennen. Der Saugraum 29 ist über eine Bohrung 31 und der Druckraum 30 über eine Bohrung 32 mit jeweils einer Lagerbohrung 33 bzw. 34 verbunden. Die Lagerbohrungen 33,34 sind quer zu der Längsachse der Pumpenelemente 21,22 ausgerichtet und münden frei am Pumpengehäuse 20. In Fig. 3 sind die dem Pumpenelement 22 zugeordneten Lagerbohrungen 33,34 im Schnitt zu sehen. Da auch dem Pumpenelement 21 jeweils zwei Lagerbohrungen 33,34 zugeordnet sind, liegen insgesamt vier Lagerbohrungen mit Abstand in Achsrichtung der Pumpenelemente 21,22 nebeneinander.

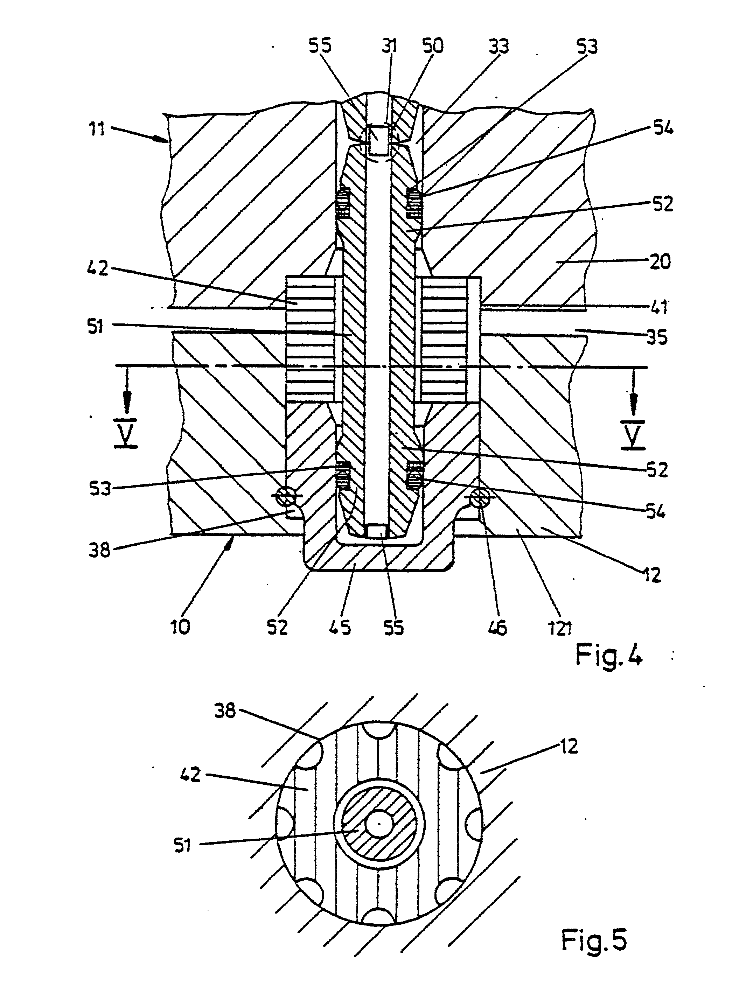

Wie aus Fig. 2 ersichtlich, ist das Pumpengehäuse 20 im Querschnitt etwa T-förmig ausgebildet und ragt mit seinem breiten Mittelschenkel in eine längs der Achsen der Pumpenelemente 21,22 sich erstreckende, im Querschnitt etwa U-förmige Ausnehmung 35 im Aggregatgehäuse 12 mit Spiel hinein und ist am Grunde der Ausnehmung 35 mittels eines in die Stirnseite des Pumpengehäuses 20 eingeschraubten Schraubenbolzens 36 und einer Buchse 37 aus gummielastischem Material im Aggregatgehäuse 12 weich aufgehängt. In jedem der die beiden Schenkel der Ausnehmung begrenzenden Gehäuseteile 121,122 des Aggregatgehäuses 12 sind jeweils vier Lagerbohrungen 38 bzw. 39 vorgesehen. Jeweils zwei Lagerbohrungen 38,39 in den beiden Gehäuseteilen 121,122 liegen sich axial gegenüber und fluchten mit jeweils einer Lagerbohrung 33 bzw. 34 im Pumpengehäuse 20. Insgesamt sind somit acht, sich jeweils paarweise gegenüberliegende Lagerbohrungen 38,39 im Aggregatgehäuse 12 und vier Lagerbohrungen 33,34 im Pumpengehäuse 20 vorhanden. Die Lagerbohrungen 39 im Gehäuseteil 122 sind als Sackbohrungen ausgebildet und weisen an ihrer Austrittsstelle aus dem Gehäuseteil 122 eine kreisringförmige Erweiterung 40 auf. Die Lagerbohrungen 39 im Gehäuseteil 121 sind als Durchgangsbohrungen ausgebildet und weisen einen Durchmesser auf, der dem Durchmesser der ringförmigen Erweiterung der Lagerbohrungen 39 entspricht. Die Lagerbohrungen 33,34 im Pumpengehäuse 20 weisen an ihrer Austrittsstelle aus dem Pumpengehäuse 20 ebenfalls eine ringförmige Erweiterung 41 mit gleichem Durchmesser auf. Die Lagerbohrungen 38 im Gehäuseteil 121 sind an dem dem Pumpengehäuse 20 abgekehrten Ende mit einer Kappe 45 abgedeckt, die teilweise in die Lagerbohrung 38 hineinragt und dort in der Bohrungswand mit einem Sprengring 46 gehalten ist (vergl. auch die vergößerte Darstellung in Fig. 4). In den einander paarweise gegenüberliegenden Erweiterungen 40,41 der Lagerbohrungen 39 bzw. 33,34 einerseits und in den ringförmigen Erweiterungen 41 der Lagerbohrungen 33,34 und den Lagerbohrungen 38 im Gehäuseteil 121 andererseits sind jeweils Hüllsen 42 aus gummielastischem Material verspannt, wodurch das Pumpengehäuse 20 mit angeflanschtem Elektromotor 25 elastisch und mit Spiel im Aggregatgehäuse 12 gelagert ist. Bei den vier Lagerbohrungen 33,34 im Pumpengehäuse 12 sind insgesamt acht einander paarweise gegenüberliegende Hüllsen 42 und damit elastische Lager vorhanden. Zwei in das Aggregatgehäuse 12 eingepreßte Stifte 43, von welchen in Fig. 3 nur einer zu sehen ist, durchdringen jeweils eine parallel zu den Lagerbohrungen 33,34 im Pumpengehäuse 20 ausgerichtete Durchgangsbohrung 44, derenDurchmesser wesentlich größer bemessen ist als der Durchmesser der Stifte 43, und begrenzen damit die Relativbewegung des Pumpengehäuses 20 innerhalb des Aggregatgehäuses 12.

Zwischen der Förderpumpe, 11 und dem Betätigungsaggregat 10 sind jeweils zwei Saugleitungen und zwei Druckleitungen vorgesehen. Die Saugleitungen verbinden jeweils den Saugraum 29 der beiden Pumpenelemente 21,22 mit einer Speicherkammer 14. Die Druckleitungen verbinden jeweils den Druckraum 30 der beiden Pumpenelemente 21,22 mit einer Dämpfungskammer 15 im Aggregatgehäuse 12. Die Saug- und Druckleitungen sind hier als Gehäusebohrungen ausgebildet, wobei jeweils eine Gehäusebohrung 47 bzw. 48 am Sackgrund der Lagerbohrungen 39 im Gehäuseteil 122 münden. Dabei führt die Gehäusebohrung 47 von einer Speicherkammer 14 zu einer Lagerbohrung 391,die mit der Lagerbohrung 33 im Pumpengehäuse 20 fluchtet, und die Gehäusebohrung 48 von einer Dämpfungskammer 15 zu der Lagerbohrung 392, die mit der Lagerbohrung 34 im Pumpengehäuse 20 fluchtet. Diese Beschreibung gilt jeweils für ein Pumpenelement 21 bzw. 22, so daß insgesamt zwei Gehäusebohrungen 47 und zwei Gehäusebohrungen 48 vorhanden sind.

Zur flüssigkeitsdichten Verbindung der Gehäusebohrungen 47,48 über die Lagerbohrungen 391 und 392 einerseits und der Bohrungen 31,32 die zu den Druck- bzw. Saugraum 29,33 der Pumpenelemente 21,22 führen, über die Lagerbohrungen 33,34 im Pumpengehäuse 20 andererseits sind jeweils zwei Verbindungsröhrchen 50,51 vorgesehen, die axial hintereinander in jeweils drei miteinander fluchtenden Lagerbohrungen 391,33,38 bzw. 392,34,38 im Aggregatgehäuse 12 und Pumpengehäuse 20 eingeschoben sind. Das Einschieben der Verbindungsröhrchen 50,51 erfolgt vor Einsetzen der Kappen 45 in die Lagerbohrungen 38, wobei die beiden Verbindungsröhrchen 50,51 durch die Hülsen 42 hindurchgeschoben werden. Der Innendurchmesser der Hülsen 42 ist entsprechend bemessen. Nach Einschieben der Verbindungsröhrchen 50,51 wird jeweils ein Röhrchen 50,51 von einer Hülse 42 mit radialem Abstand umschlossen. Die Verbindungsröhrchen 50,51 sind so ausgebildet, daß sie unter Abdichtung der Lagerbohrungen 33,34, 38,39 schwenk- und längsverschiebbar in den Lagerbohrungen 33,34, 38,39 einliegen und so die Relativbewegung von Pumpengehäuse 20 zum Aggregatgehäuse 12 nicht behindern. Die identisch ausgebildeten Verbindungsröhrchen 50,51 sind hierzu nahe der beiden Stirnenden kugelartig verdickt und tragen einen in einer Außennut 53 der Verdickung 52 einliegenden Dichtungsring 54, wobei der Dichtungsring längs des Äquators der kugelartigen Verdickungen 52 verläuft (vergl. Fig. 4). Mit diesem Dichtungsring 54 pressen sich die Verdickungen 52 an den Bohrungswänden der Lagerbohrungen 33,34 im Pumpengehäuse 20 und der Lagerbohrungen 39 bzw. in den Kappen 45 an, wodurch die Mündungsstellen der Bohrungen 31,32 in den Lagerbohrungen 33,34 bzw. der Gehäusebohrungen 47,48 in den Lagerbohrungen 391,392 gegenüber dem Bereich der Hülsen 42 abgedichtet werden. Zur Sicherstellung der Schwenkbeweglichkeit der Verbindungsröhrchen 50,51 bei geringstmöglichen Reibungskräften ist derjenige Teil der Verdickungskonturen der Verdickungen 52, der auf den von den Stirnseiten der Verbindungsröhrchen 50,51 abgekehrten Dichtungsringseiten verläuft, sphärisch ausgebildet und derjenige Teil der Verdickungskonturen, der auf den den Stirnseiten der Verbindungsröhrchen 50,51 zugekehrten Dichtungsringseiten verläuft. konisch ausgebildet. An den Stirnseiten der Verbindungsröhrchen ist jeweils eine diametrale Quernut 55 (Fig.4) vorgesehen, so daß auch bei stirnseitig aneinanderliegenden Verbindungsröhrchen 50,51 eine Verbindung zwischen dem hohlen Innern der Verbindungsröhrchen 50,51 und den Lagerbohrungen 33,34, 38,39 besteht. Die Verbindungsröhrchen 50,51 können in einfacher Weise aus Aluminiumrohr hergestellt werden, wobei die Verdickungen 52 durch beidseitiges Anstauchen gewonnen werden können. Während die in den Lagerbohrungen 33,34 des Pumpengehäuses 20 einerseits und den Lagerbohrungen 39 im Aggregatgehäuse 12 andererseits einliegenden Verbindungsröhrchen 50 Teil der Saug- und Druckleitungen zwischen der Förderpumpe 11 und dem Betätigungsaggregat 10 darstellen und sowohl flüssigkeitsleitende als auch flüssigkeitsabdichtende Funktion haben, haben die in den Lagerbohrungen 33,34 des Pumpengehäuses 20 einerseits und den Lagerbohrungen 38 im Aggregatgehäuse 12 andererseits einliegenden Verbindungsröhrchen 51 ausschließlich abdichtende Funktion, da sie lediglich die Lagerbohrungen 33,34 gegenüber den durch die Hülsen 42 gebildeten elastischen Lagerstellen abdichten müssen. Diese Verbindungsröhrchen 51 könnten daher auch als Vollzylinder ausgebildet werden. Die identische Ausbildung aller Verbindungsröhrchen 50,51 wirkt sich aber vorteilhaft auf die Fertigungskosten aus.

Zu erwähnen bleibt, daß jeweils eine Dämpfungskammer 15 über eine Drossel 56 zur Glättung der Fördermengen-Ungleichförmigkeit der Rückförderpumpe 11 und Bohrungen 57,58,59 im Aggregatgehäuse 12 mit dem zweikreisigen Hauptbremszylinder 13 verbunden ist. Über die Magnetventile 16 kann die Verbindung vom Hauptbremszylinder 13 zu den Bremsleitungen gesperrt bzw. hergestellt werden. Im gleichen Schaltzustand der Magnetventile 16 werden über Kanäle 60 im Aggregatgehäuse 12 bestehende Verbindungen der Speicherkammern 14 zu den Bremsleitungen geöffnet bzw. gesperrt.

Die Wirkungsweise des vorstehend beschriebenen Bremsgerätes ist wie folgt:

Erreicht ein Rad beim Bremsen die Blockiergrenze, so wird der Druck mittels des elektronischen Reglers in dem entsprechenden Radbremszylinder abgebaut. Hierzu wird das zugehörige Magnetventil 16 aktiviert, das umschaltet und die zu dem Radbremszylinder führende Bremsleitung von dem zweikreisigen Hauptbremszylinder 13 abschaltet und mit einem der beiden Kanäle 60 verbindet, der jeweils zu einer der beiden Speicherkammern 14 führt. Damit fließt Bremsflüssigkeit in die Speicherkammer 14, die sich im Volumen erweitert. Gleichzeitig wird der Elektromotor 25 der Förderpumpe 11 aktiviert. Die Förderpumpe 11 läuft an und saugt die in die Speicherkammer 14 zurückströmende Bremsflüssigkeit über die Gehäusebohrung 47, die Lagerbohrung 391, dem Verbindungsröhrchen 50, die Lagerbohrung 33 im Pumpengehäuse 20 und über die Bohrung 31 im Pumpengehäuse 20 in den Saugraum 29. Von hier wird die Bremsflüssigkeit in den Druck-

raum 3O gefördert und fließt von da aus über die Bohrung 32 und die Lagerbohrung 34 im Pumpengehäuse 2O, das Verbindungsröhrchen 5O, die Lagerbohrung 392 im Aggregatgehäuse 12 und über die Gehäusebohrung 48 in eine Dämpfungskammer 15. Über die Drossel 56 und die Bohrungen 57,58 und 59 gelangt die Bremsflüssigkeit in eine der Arbeitskammern des Hauptbremszylinders 13 und schiebt hier den Kolben und das Bremspedal zurück.

Bei Abnehmen der Blockiergefahr wird der Druck in dem entsprechenden Radbremszylinder wieder erhöht. Hierzu werden das Magnetvenil 16 und der Elektromotor 25 der Förderpumpe 11 wieder abgeschaltet. Die entsprechende Arbeitskammer im Hauptbremszylinder 13 steht dann wieder über die Bohrungen 59,58 und 61 und über das zugehörige Magnetventil 16 mit dem Bremsleitungsanschluß im Deckel 17 in Verbindung. Der Kanal 6O ist vom Bremsleitungsanschluß abgesperrt.

Bei diesem Vorgang wird über die Verbindungsröhrchen 5O eine flüssigkeitsdichte flexible Verbindung zwischen der Lagerbohrung 33 im Pumpengehäuse 2O und der Lagerbohrung 391 im Aggregatgehäuse 12 einerseits und der Lagerbohrung 34 im Pumpengehäuse 2O und der Lagerbohrung 392 im Aggregatgehäuse 12 andererseits hergestellt, so daß die Förderpumpe 11 im Betätigungsaggregat 1O in Grenzen frei schwingen kann und somit von dem Betätigungsaggregat 1O und der Fahrzeugkarosserie körperschallentkoppelt ist. Die Verbindungsröhrchen 51 dienen einen ausschließlich der Flüssigkeitsabdichtung gegenüber den von den Hülsen 42 gebildeten elastischen Lagern, die einerseits in den Lagerbohrungen 38 im Gehäuseteil 121 des Aggregatgehäuses 12 und andererseits in den Erweiterungen 4O der Lagerbohrungen 33,34 im Pumpengehäuse 2O einliegen.

## Patentansprüche

1. Bremsgerät für eine hydraulische Fahrzeugbremsanlage, das ein Aggregatgehäuse (12) und eine elektrisch angetriebene Förderpumpe (11) enthält, deren Pumpengehäuse (20) in elastischen Lagern (42) am Aggregatgehäuse (12) relativ zu diesem beweglich aufgehängt ist und die über mindestens eine Saugleitung und über mindestens eine Druckleitung mit dem Aggregatgehäuse (12) in Verbindung steht, dadurch gekennzeichnet, daß die Saug- und Druckleitungen als Gehäusebohrungen (31, 33, 39, 47; 32, 34, 39, 48, 57, 58, 59) im Aggergat- und Pumpengehäuse (12; 20) ausgebildet sind, und daß zur flüssigkeitsdichten Verbindung von jeweils zwei in einem Leitungszug aufeinanderfolgenden, im Aggregatgehäuse (12) einerseits und im Pumpengehäuse (20) andererseits verlaufenden Gehäusebohrungen (31, 47; 32, 48) je ein erstes Verbindungsröhrchen (50) in zwei miteinander im wesentlichen fluchtenden Lagerbohrungen (33, 391; 34, 392), von denen eine im Aggregatgehäuse (12) und eine im Pumpengehäuse (20) angeordnet ist, unter Abdichtung der Lagerbohrungen (33, 391; 34, 392) schwenk- und längsverschiebbar einliegen zum Ausgleich von Relativbewegungen des Pumpengehäuses (20) zum Aggregatgehäuse (12), und daß jeweils eine der im Aggregat- und Pumpengehäuse (12, 20) aufeinanderfolgenden Gehäusebohrungen (31, 47; 32, 48) in die zugeordnete Lagerbohrung (33, 391; 34, 392) so eintritt, daß sie am zur Längsbohrungswand hin abgedichteten Stirnende des Verbindungsröhrchens (50) mündet, und daß jedem ersten Verbindungsröhrchen (50) ein zweites Verbindungsröhrchen (51) zugeordnet ist, das im wesentlichen fluchtend zum ersten angeordnet und mit seinem gegen das erste Verbindungsröhrchen (50) gerichteten Ende in der Gehäusebohrung (33; 34) des Pumpengehäuses (20) und mit seinem anderen Ende in dem Aggregatgehäuse (12) unter hydraulischer Abdichtung schwenk- und längsverschiebbar einliegt.

2. Bremsgerät nach Anspruch 1, dadurch gekennzeichnet, daß das Verbindungsröhrchen (5O) nahe der beiden Stirnenden kugelartig verdickt ist und zur Abdichtung der Lagerbohrungen (33,391; 34,392) in jeder Verdickung (52) einen in einer Außennut (53) einliegenden Dichtungsring (54) trägt und daß zumindest derjenige Teil der Verdickungskonturen, der auf den von den Stirnseiten des Verbindungsröhrchens (5O) abgekehrten Dichtungsringseiten verläuft, sphärisch ausgebildet ist.

3. Bremsgerät nach Anspruch 2, dadurch gekennzeichnet, daß derjenige Teil der Verdickungskonturen, der auf den den Stirnseiten des Verbindungsröhrchens, (5O) zugekehrten Dichtungsringseiten verläuft, konisch ausgebildet ist.

4. Bremsgerät nach Anspruch 2 oder 3, dadurch gekennzeichnet, daß die Dichtungsringe (54) jeweils längs des Äquators der kugelartigen Verdickungen (52) verlaufen.

5. Bremsgerät nach einem der Ansprüche 2 - 4, dadurch gekennzeichnet, daß das Verbindungsröhrchen (5O) als Aluminiumrohr mit beidseitig angestauchten Enden ausgebildet ist.

6. Bremsgerät nach einem der Ansprüche 1 - 5, dadurch gekennzeichnnet, daß die elastischen Lager zur Aufhängung des Pumpengehäuses (2O) am Aggregatgehäuse (12) Hülsen (42) aus gummielastischem Material aufweisen und daß jede Hülse (42) ein Verbindungsröhrchen (5O) mit Radialspiel umschließt und in gegenüberliegenden ringförmigen Erweiterungen (4O,41) der miteinander fluchtenden Lagerbohrungen (391,33;392,34) im Aggregat- und Pumpengehäuse (12,2O) verspannt ist.

7. Bremsgerät nach einem der Ansprüche 1 - 6, dadurch gekennzeichnet, daß das Aggregatgehäuse (12) ein im Querschnitt etwa U-förmige längsdurchgehende Ausnehmung (35) aufweist, in welche das Pumpengehäuse (2O) zumindest teilweise mit Spiel hineinragt, daß in jedem der die beiden Schenkel der Ausnehmung (35) begrenzenden Gehäuseteile (121,122) des Aggregatgehäuses (12) mindestens zwei Lagerbohrungen (38,39) angeordnet sind, die jeweils mit der Lagerbohrung (39,38) des gegenüberliegenden schenkelbegrenzenden Gehäuseteils (122,121) und mit den mindestens zwei Lagerbohrungen (33,34) im eingesetzten Pumpengehäuse (2O) fluchten, und daß jeweils in den miteinander fluchtenden drei Lagerbohrungen (38,33,39; 38,34,39) zwei in den Lagerbohrungen (33,34) des Pumpengehäuses (2O) stirnseitig aneinandersto-

ßende Verbindungsröhrchen (5O,51) einliegen, von denen jeweils eines in eine andere Lagerbohrung (38 bzw. 39) des Aggregatgehäuses (12) hineinragt.

8. Bremsgerät nach Anspruch 7, **dadurch gekennzeichnet**, daß die Lagerbohrungen (39) in dem einen schenkelbegrenzenden Gehäuseteil (122) als Sackbohrungen ausgebildet sind, in deren Sackgrund jeweils eine aggregatgehäuseseitige Gehäusebohrung (47,48) mündet; und daß die Lagerbohrungen (38) in dem gegenüberliegenden schenkelbegrenzenden Gehäuseteil (121) als Durchgangsbohrungen ausgebildet sind, die an dem von dem Pumpengehäuse (2O) abgekehrten Ende mittels einer Kappe (45) flüssigkeitsdicht abgeschlossen sind.

9. Bremsgerät nach Anspruch 7 oder 8, **dadurch gekennzeichnet**, daß in jeder Stirnseite der Verbindungsröhrchen (5O,51) eine diametrale Quernut (55) verläuft.

1O. Bremsgerät nach einem der Ansprüche 7 - 9, **dadurch gekennzeichnet**, daß jedes der Verbindungsröhrchen (5O,51) von einer gummielastischen Hülse (42) mit Abstand umschlossen ist, die jeweils ein elastisches Lager für die Förderpumpe (11) im Betätigungsaggregat (1O) bildet.

11. Bremsgerät nach einem der Ansprüche 6 - 1O für eine Zweikreisbremsanlage, **dadurch gekennzeichnet**, daß im Aggregatgehäuse(12) zwei separate Speicherkammern (14), zwei separate Druckkammern (15), insgesamt acht jeweils paarweise fluchtende Lagerbohrungen (38,39) und im Pumpengehäuse (2O) insgesamt vier Lagerbohrungen (33,34) vorgesehen sind, die nach Einsetzen des Pumpengehäuses (2O) in das Aggregatgehäuse (12) jeweils mit den paarweise fluchtenden Lagerbohrungen (38,39) im Aggregatgehäuse (12) in der Längsachse ausgerichtet sind.

## Claims

1. Brake device for an hydraulic vehicle brake system which contains a unit housing (12) and an electrically driven feed pump (11) the pump housing (20) of which is suspended in elastic bearings (42) at the unit housing (12) to be movable relative to the latter and which is connected via at least one suction line and via at least one pressure line to the unit housing (12), characterized in that the suction and pressure lines are constructed as housing holes (31, 33, 39, 47; 32, 34, 39, 48, 57, 58, 59) in the unit and pump housing (12; 20) and that for the liquid-tight connection of in each case two housing holes (31, 47; 32, 48) which follow one another in one line string and extend in the unit housing (12) on the one hand, and in the pump housing (20) on the other hand, one first small connecting tube (50) each rests rotatably and longitudinally displaceably in two essentially mutually aligned bearing holes (33, 391; 34, 392), one of which is arranged in the unit housing (12) and one of which is arranged in the pump housing (20), whilst sealing the bearing holes (33, 391; 34, 392), for compensating relative movements of the pump housing (20) with respect to the unit housing (12), and that in each case one of the housing holes (31, 47; 32, 48) following one another in the unit and pump housing (12, 20) enters into the associated bearing hole (33, 391; 34, 392) in such a manner that it opens at the front end of the small connecting tube (50) which is sealed towards the longitudinal hole wall, and that each first small connecting tube (50) is associated with a second small connecting tube (51) which is arranged essentially aligned with the first one and rests rotatably and longitudinally displaceably with its end pointing towards the first small connecting tube (50) in the housing hole (33, 34) of the pump housing (20) and with its other end in the unit housing (12) with hydraulic sealing.

2. Brake device according to Claim 1, characterized in that the small connecting tube (50) is enlarged in the manner of a sphere close to the two front ends and carries with each enlargement (52) a sealing ring (54) resting in an outside groove (53) for sealing the bearing holes (33, 391; 34, 392) and that at least the part of the enlargement contours which extends on the sealing ring sides facing away from the front ends of the small connecting tube (50) is spherically constructed.

3. Brake device according to Claim 2, characterized in that the part of the enlargement contours which extends on the sealing ring sides facing the front ends of the small connecting tube (50) is conically constructed.

4. Brake device according to Claim 2 or 3, characterized in that the sealing rings (54) in each case extend along the equator of the spherical enlargements (52).

5. Brake device according to one of Claims 2-4, characterized in that the small connecting tube (50) is constructed as aluminium tube with ends compressed at both ends.

6. Brake device according to one of Claims 1-5, characterized in that the elastic bearings for suspending the pump housing (20) at the unit housing (12) exhibit sleeves (42) of rubber-elastic material and that each sleeve (42) encloses a small connecting tube (50) with radial play and is clamped in opposite annular expansions (40, 41) of the mutually aligned bearing holes (391, 33; 392, 34) in the unit and pump housing (12, 20).

7. Brake device according to one of Claims 1-6, characterized in that the unit housing (12) exhibits a longitudinally continuous recess (35) which is approximately U-shaped in cross-section and into which the pump housing (20) protrudes at least partially with play, that in each of the housing parts (121, 122), which limit the two legs of the recess (35) of the unit housing (12) at least two bearing holes (38, 39) are arranged which are in each case aligned with the bearing hole (39, 38) of the opposite leg-limiting housing part (122, 121) and with the at least two bearing holes (33, 34) in the inserted pump housing (20), and that in each case in the mutually aligned three bearing holes (38, 33, 39; 38, 34, 39) two small connecting tubes (50, 51) rest which abut at the front ends in the bearing holes (33, 34) of the pump housing (20) and one of which in each case protrudes into one other bearing hole (38 and 39, respectively) of the unit housing (12).

8. Brake device according to Claim 7, characterized in that the bearing holes (39) in one leg-limiting housing part (122) are constructed as blind holes in the blind bottom of which in each case one unit-housingside housing hole (47, 48) opens, and that the bearing holes (38) in the opposite leg-limiting housing part (121) are constructed as through holes which are closed liquid-tight by means of a cap (45) at the end facing away from the pump housing (20).

9. Brake device according to Claim 7 or 8, characterized in that a diametric transverse groove (55) extends in each front end of the small connecting tubes (50, 51).

10. Brake device according to one of Claims 7-9, characterized in that each of the small connecting tubes (50, 51) is enclosed at a distance by a rubber-elastic sleeve (42) which in each case forms an elastic bearing for the feed pump (11) in the actuating unit (10).

11. Brake device according to one of Claims 6-10 for a dual-circuit brake system, characterized in that in the unit housing (12) two separate storage chambers (14), two separate pressure chambers (15), a total of eight bearing holes (38, 39), which are in each case aligned in pairs, and in the pump housing (20) a total of four bearing holes (33, 34) are provided which, after insertion of the pump housing (20) into the unit housing (12), are in each case aligned in the longitudinal axis with the bearing holes (38, 39), which are aligned in pairs, in the unit housing (12).

**Revendications**

1. Appareil de freinage destiné à une installation hydraulique de freinage de véhicule, qui comprend un corps de groupe (12) et une pompe de circulation (11) entraînée électriquement, dont le corps de pompe (20) est suspendu sur des appuis élastiques (42) au corps de groupe (12), en étant mobile par rapport à celui-ci, et est relié par au moins un conduit d'aspiration et par au moins un conduit de refoulement au corps du groupe (12), caractérisé en ce que les conduits d'aspiration et de refoulement sont constitués par des alésages (31, 33, 39, 47 ; 32, 34, 39, 48, 57, 58, 59) dans les corps de groupe et de pompe (12 ; 20) et en ce que, pour assurer une liaison étanche aux liquides de deux paires d'alésages dans le corps (31, 47 ; 32, 48) se succédant dans une suite de conduits aménagés dans le corps du groupe (12) d'une part, et s'étendant dans le corps de pompe (20) d'autre part, il est respectivement disposé un premier petit tube de raccordement (50) dans deux alésages de paliers (33, 391 ; 34, 392) essentiellement alignés l'un sur l'autre, dont l'un se trouve dans le corps du groupe (12) et l'autre dans le corps de pompe (20), lesquels petits tubes sont engagés, en assurant l'étanchéité des alésages de paliers (33, 391 ; 34, 392), avec une possibilité de mouvement pivotant et longitudinal, afin de compenser les déplacements du corps de pompe (20) par rapport au corps de groupe (12), et en ce qu'un des alésages de corps (31, 47 ; 32, 48) qui se font suite dans les corps de groupe et de pompe (12, 20) pénètre dans l'alésage de palier (33, 391 ; 34, 392) qui lui est adjoint, de manière à déboucher sur la face frontale du petit tube de raccordement (50) étanchéisée par rapport à la paroi d'alésage longitudinal, et en ce qu'il est adjoint à chaque premier petit tube de raccordement (50) un deuxième petit tube (51), qui est disposé essentiellement aligné avec le premier et qui s'engage par son extrémité dirigée vers le premier petit tube dans l'alésage (33, 34) du corps de pompe (20) et par son autre extrémité dans le corps du groupe (12) avec possibilité de mouvement pivotant et longitudinal.

2. Appareil de freinage selon la revendication 1, caractérisé en ce que le petit tube de raccordement (50) est épaissi en forme de boule à proximité de ses deux extrémités frontales et supporte dans chaque épaississement (52), afin d'étancher les alésages de paliers, une bague d'étanchéité (54) engagée dans une gorge extérieure et en ce qu'au moins la partie des contours de l'épaississement, qui s'étend sur les côtés de la bague d'étanchéité opposés aux faces frontales du petit tube (50), est constituée en forme de sphère.

3. Appareil de freinage selon la revendication 2, caractérisé en ce que la partie des contours de l'épaississement qui s'étend sur les côtés de la bague d'étanchéité en regard du petit tube (50) présente une forme conique.

4. Appareil de freinage selon la revendication 2 ou 3, caractérisé en ce que les bagues d'étanchéité (54) s'étendent respectivement le long de l'équateur des épaississements (52) en forme de boule.

5. Appareil de freinage selon l'une des revendications 2-4, caractérisé en ce que le petit tube de raccordement (50) est constitué par un tube d'aluminium avec des extrémités refoulées des deux côtés.

6. Appareil de freinage selon l'une des revendications 1-5, caractérisé en ce que les appuis élastiques prévus pour la suspension du corps de pompe (20) au corps du groupe (12) présentent des manchons (42) en matière de gomme élastique et en ce que chaque manchon (42) entoure un petit tube de raccordement (50) pourvu d'un certain jeu radial et est tendu dans des élargissements (40, 41) en regard, de forme annulaire, qui sont aménagés dans les alésages de paliers (391, 33 ; 392, 34) alignés ensemble dans les corps de groupe et de pompe (12, 20).

7. Appareil de freinage selon l'une des revendications 1-6, caractérisé en ce que le corps du groupe (12) présente un évidement (35) continu dans le sens de la longueur, dont la section est sensiblement en forme d'U, et dans lequel le corps de pompe (20) s'enfonce au moins en partie avec du jeu, en ce que sont disposés au moins deux alésages de paliers (38, 39) dans chacune des parties (121, 122) du corps du groupe (12) délimitant les deux montants de l'évidement (35), lesquels sont respectivement alignés avec l'alésage de palier (38, 39) de la partie de corps (122, 121) délimitant les montants située en regard et avec les deux alésages de palier (33, 34) aménagés dans le corps de pompe (20) mis en place et en ce que deux petits tubes de raccordement (50, 51) aboutés par leurs faces frontales dans les alésages (33, 34) du corps de pompe sont respectivement engagés dans les trois alésages de paliers (38, 33, 39 ; 38, 34, 39) ; chacun de ces deux tubes pénétrant respectivement dans un autre alésage de palier (38 ou 39) du corps du groupe (12).

8. Appareil de freinage selon la revendication 7, caractérisé en ce que les alésages de palier (39) sont constitués par des perçages borgnes dans l'une des parties du corps (122) délimitant les montants, dans le fond duquel débouche respectivement un alésage aménagé dans le corps (47, 48) du côté du corps du groupe et en ce que les alésages de palier (38) dans la partie du corps (121) délimitant les montants en regard sont constitués par des perçages ouverts, qui sont terminés par un capuchon (45) étanche au liquide à l'extrémité opposée au corps de pompe.

9. Appareil de freinage selon la revendication 7 ou 8, caractérisé en ce qu'une gorge transversale diamétrale (55) s'étend sur chaque face frontale des petits tubes de raccordement (50, 51).

10. Appareil de freinage selon l'une des revendications 7-9, caractérisé en ce que chacun des petits tubes de raccordement est entouré à une certaine distance par un manchon (42) en gomme élastique, lequel constitue un palier élastique pour la pompe de circulation dans le groupe de manoeuvre (10).

11. Appareil de freinage selon l'une des revendications 8-10, pour une installation de freinage à deux circuits, caractérisé en ce qu'il est prévu dans le corps du groupe (12) deux chambres d'accumulation (14) séparées, deux chambres de refoulement séparées (15), soit au total huit alésages de palier (38, 39) respectivement alignés par paires, et dans les corps de pompe (20) un total de quatre alésages de palier (33, 34), qui, après la mise en place du corps de pompe (20) dans le corps du groupe (12), sont respectivement alignés suivant l'axe longitudinal du corps du groupe avec les alésages de palier (38, 39) s'alignant par paires.

Fig.1

Fig. 2

Fig. 3

EP 0 248 229 B1

Fig. 4

Fig. 5